# DEMANDE DE BREVET EUROPEEN

(11) **EP 1 580 408 A1**
(43) Date de publication de la demande: **28.09.2005**
(21) Numéro de dépôt: 05300203.6
(22) Date de dépôt: 22.03.2005
(51) Int. Cl.: F01M 5/00

(54) **Dispositif de lubrification pour système d'embrayage**

(30) Priorité: 22.03.2004 FR 0402914
(71) Demandeur: Renault s.a.s., 92100 Boulogne Billancourt (FR)
(72) Inventeur: Fournier, Vincent, 92300, Levallois Perret (FR); Obert, Jacques, 92370, Chaville (FR); Favennec, Gwennael, 75012, Paris (FR)
(74) Mandataire: Rougemont, Bernard

(57) **Abrégé**

L'invention concerne un dispositif de lubrification pour un système d'embrayage. Le système d'embrayage produit des premières quantités d'énergie thermique durant des premières phases de fonctionnement et des secondes quantités supplémentaires durant des secondes phases de fonctionnement, ledit dispositif de lubrification comprenant un circuit de lubrification et des moyens de distribution d'huile dudit circuit de lubrification, pour dissiper l'énergie thermique produite par ledit système d'embrayage, ledit dispositif comportant des moyens de refroidissement de l'huile. Durant les premières phases de fonctionnement, les moyens de distribution (134, 234) sont adaptés à fournir une première quantité d'huile audit circuit de lubrification (132, 232) à travers lesdits moyens de refroidissement (158, 258), et durant les secondes phases de fonctionnement, à fournir une quantité d'huile supplémentaire directement dans ledit circuit de lubrification (1232, 232).

## Description

La présente invention se rapporte à un dispositif de lubrification pour système d'embrayage de boîte de vitesse de véhicule automobile.

Un domaine d'application envisagé est notamment celui des boîtes de vitesse à deux embrayages humides pour lesquelles il est nécessaire de les lubrifier tous les deux.

Des dispositifs d'embrayage connus comportent des moyens de distribution d'huile et un circuit de lubrification, pour dissiper l'énergie thermique produite par ledit système d'embrayage.

Lorsque les embrayages sont utilisés dans des situations où ils produisent beaucoup d'énergie thermique par frottement, par exemple au démarrage du véhicule ou aux passages de vitesses à hauts régimes, le débit d'huile de lubrification doit être suffisant afin d'évacuer cette énergie thermique

En outre, cette huile doit être convenablement refroidie dans des moyens de refroidissement constitués d'un échangeur, d'une part pour ne pas qu'elle se dégrade et d'autre part pour qu'elle puisse dissiper convenablement l'énergie thermique produite par les embrayages.

En revanche, lorsque les embrayages produisent peu d'énergie, dans les phases de fonctionnement correspondant au roulage normal du véhicule, par exemple lors du passage des vitesses à bas régime ou du glissement contrôlé éventuel, le débit de lubrification doit être adapté pour lubrifier les faces de friction des embrayages sans toutefois engendrer de couple de frottement trop important et pénaliser le rendement de la transmission.

Dans les systèmes d'embrayage connus, le débit de lubrification est assuré par un régulateur de pression qui permet d'assurer une pression fixe dans le circuit de lubrification et par conséquent un débit fixe. Ainsi, le régulateur de pression est dimensionné pour réaliser un compromis entre les différentes phases de fonctionnement du véhicule et pour que le débit d'huile permette à la fois de dissiper l'énergie thermique dans les phases où l'embrayage en produit beaucoup et de ne pas trop compromettre le rendement de l'embrayage dans les autres phases. Néanmoins, on est contraint de privilégier la lubrification de l'embrayage au détriment de son rendement, car on peut accepter un mauvais rendement mais pas qu'il puisse se gripper. C'est d'ailleurs la raison pour laquelle l'échangeur est dimensionné pour pouvoir évacuer l'énergie thermique de l'huile dans une situation de dissipation maximale.

Un problème qui se pose et que vise à résoudre la présente invention est alors de fournir un dispositif de lubrification qui permette de dissiper l'énergie thermique en toute circonstance sans pour autant compromettre le rendement de l'embrayage.

Dans ce but, la présente invention propose un dispositif de lubrification pour système d'embrayage de boîte de vitesse de véhicule automobile, ledit système d'embrayage produisant des premières quantités d'énergie thermique durant des premières phases de fonctionnement dudit système d'embrayage et des secondes quantités supplémentaires durant des secondes phases de fonctionnement, ledit dispositif de lubrification comprenant un circuit de lubrification et des moyens de distribution d'huile dudit circuit de lubrification, pour dissiper l'énergie thermique produite par ledit système d'embrayage, ledit dispositif comportant des moyens de refroidissement de l'huile ; et, durant lesdites premières phases de fonctionnement, lesdits moyens de distribution sont adaptés à fournir une première quantité d'huile audit circuit de lubrification à travers lesdits moyens de refroidissement, et durant lesdites secondes phases de fonctionnement, à fournir une quantité d'huile supplémentaire directement dans ledit circuit de lubrification, en contournant lesdits moyens de refroidissement.

Ainsi, une caractéristique de l'invention réside dans les moyens de distribution qui permettent non seulement de fournir des quantités d'huile différentes en fonction des phases de fonctionnement du véhicule, mais aussi de faire circuler ladite première quantité d'huile de lubrification uniquement à travers les moyens de refroidissement dans les premières phases de fonctionnement, par exemple lorsque l'embrayage produit peu d'énergie thermique et d'y ajouter une quantité d'huile supplémentaire en contournant les moyens de refroidissement dès que le véhicule est dans les secondes phases de fonctionnement, et notamment lorsque l'embrayage produit beaucoup d'énergie. De la sorte, durant les premières phases de fonctionnement qui correspondent aux phases de roulage normal et qui sont les plus fréquentes, l'huile traverse les moyens de refroidissement avant de rejoindre le circuit de lubrification, moyens de refroidissement qui sont alors dimensionnés pour une première quantité d'huile déterminée à une température théorique maximale. En outre, lorsque le véhicule est dans une phase de fonctionnement dans laquelle l'embrayage produit de grande quantité d'énergie thermique, une quantité d'huile supplémentaire est directement injectée dans le circuit de lubrification.

Selon un mode particulier de mise en oeuvre de l'invention, lesdits moyens de distribution fournissent ladite première quantité d'huile selon un premier mode de régulation et ladite quantité d'huile supplémentaire selon un second mode de régulation. Ainsi, durant les premières phases qui correspondent notamment aux phases de roulement normal, la première quantité d'huile adaptée à lubrifier l'embrayage est-elle susceptible d'être finement régulée pour optimiser le rendement de l'embrayage, alors que dans les phases de fortes productions d'énergie thermique, qui sont moins fréquentes, la seconde quantité d'huile peut être moins finement régulée. Ainsi, sans compromettre le rendement de l'embrayage on simplifie grandement la construction desdits moyens de distribution.

Selon une caractéristique avantageuse, ledit dispositif comprend en outre, des moyens de détection et des moyens de commande reliés ensemble, et lesdits moyens de commande sont adaptés à commander lesdits moyens de distribution selon ledit premier ou second mode de régulation en réponse auxdits moyens de détection qui détectent respectivement les unes ou les autres, desdites premières ou secondes phases de fonctionnement. Ainsi, les moyens de commande, par exemple une électrovanne, en réponse à un signal fourni par les moyens de détection, par exemple un compte tours ou un dispositif apte à mesurer le couple moteur, sont adaptés à commander les moyens de distribution, selon le premier ou le second mode de régulation. Ces derniers sont, par exemple, formés d'un distributeur à tiroir.

Avantageusement, ce distributeur à tiroir présente une entrée et deux sorties ; une première reliée auxdits moyens de refroidissement et une seconde reliée directement audit circuit de lubrification et ledit tiroir est adapté à libérer ladite première sortie dans lesdites premières phases de fonctionnement et à libérer les deux sorties dans les secondes phases de fonctionnement. Ainsi, de façon simple, le tiroir maintenu au repos dans une position où il obture les deux sorties, est-il adapté à être écarté de cette position par translation en découvrant d'abord la première sortie durant le premier mode de régulation, puis la seconde sortie durant le second mode de régulation.

Selon un mode de réalisation particulier de l'invention, ladite première sortie dudit distributeur à tiroir est munie d'un dispositif de régulation hydraulique du débit d'huile en réponse auxdits moyens de commande de façon à pouvoir ajuster précisément la quantité d'huile nécessaire à la lubrification sans subir les variations de pression et de débit qui perturbent la précision de régulation.

Afin d'éviter cette perturbation, ledit dispositif de régulation hydraulique comprend, préférentiellement un étranglement ménagé sur la première sortie et de part et d'autre duquel deux conduites de contre pression sont reliées audit distributeur à tiroir en contre réaction.

Selon une variante d'exécution, le dispositif de lubrification comprend en outre des moyens d'alimentation en huile sous pression montés sur une conduite principale qui comportent préférentiellement un réducteur de pression pour éviter que la pression d'huile soit trop importante dans le circuit de lubrification.

Avantageusement, lesdits moyens d'alimentation en huile sous pression comprennent au moins une vanne de régulation de pression pour ajuster précisément la pression dans le circuit de lubrification.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1 est une vue schématique d'un premier circuit hydraulique d'un dispositif de lubrification conforme à l'invention selon une première variante de réalisation ; et,
- la Figure 2 est une vue schématique d'un second circuit hydraulique d'un dispositif de lubrification conforme à l'invention selon une seconde variante de réalisation.

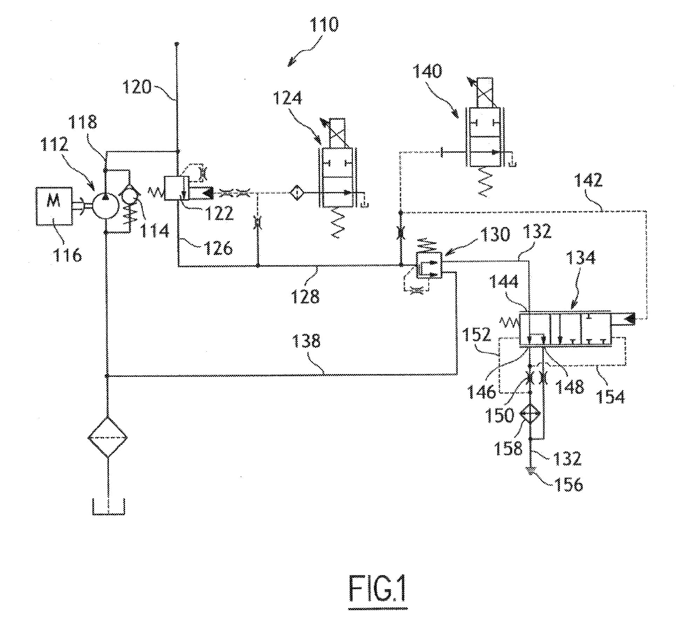

La Figure 1 illustre un circuit hydraulique 110 logé dans un véhicule automobile, comprenant une pompe à huile 112, à cylindrée fixe ou variable. Cette pompe à huile 112 est munie d'un clapet de sécurité 114 et elle est entraînée en rotation par un moteur thermique 116 du véhicule automobile.

La pompe à huile 112 présente une sortie 118 qui permet d'alimenter une ligne d'alimentation 120 à une pression de ligne déterminée P. Cette ligne d'alimentation 120 permet d'alimenter tous les organes de puissance du véhicule.

Cette pression de ligne P est régulée au moyen d'une vanne de régulation de pression 122 pilotée par une pression de consigne donnée par une première électrovanne 124. Cette vanne de régulation de pression 122 présente une sortie aval 126 qui alimente une ligne secondaire 128 à une pression de ligne secondaire 128.

Cette pression de ligne secondaire 128 est régulée par un réducteur de pression à deux sorties 130, une sortie qui débouche dans un circuit de lubrification 132, lequel alimente un distributeur à tiroir 134, et une sortie 136 qui évacue le surplus d'huile vers une ligne d'aspiration 138 de la pompe 112.

La ligne secondaire 128 alimente la première électrovanne 124 et une seconde électrovanne 140 qui est adaptée à commander le distributeur à tiroir 1134 par le bais d'un conduit 142. Cette ligne secondaire 128 permet également d'alimenter la lubrification de certains éléments non représentés et nécessitant un débit de lubrification à peu près constant.
Le distributeur à tiroir 134 comprend une entrée 144 et deux sorties, une première 146 et une seconde 148.

Le tiroir du distributeur 134 est mobile en translation entre deux positions extrêmes, d'une part une position de repos dans laquelle il obture les deux sorties 146, 148 et une position de déplacement maximal dans laquelle il libère les deux sorties 146, 148. Dans une position intermédiaire, le tiroir est adapté à libérer la première sortie 146 en obturant la seconde sortie 148.

Le tiroir est maintenu dans la position de repos par un ressort, et le tiroir est commandable en translation par l'intermédiaire de la seconde électrovanne 140 en appliquant une pression dans le conduit 142 pour vaincre la force de rappel du ressort.

Le positionnement du tiroir est donné par un équilibre d'efforts donnés par le ressort, la pression de commande dans le conduit 142 donnée par la seconde électrovanne 140 et deux pressions de contre réaction. Ces deux pressions de contre réaction permettent de réguler de manière fine le débit d'huile à travers la première sortie 146. Pour ce faire, le circuit de lubrification 132 comporte, en amont de la première sortie 146, un étranglement 150 et deux conduites de contre pression 152, 154, de part et d'autre de l'étranglement 150 et qui sont reliées audit distributeur à tiroir en contre réaction.

Le circuit de lubrification 132 présente une extrémité 156 qui rejoint directement un embrayage à lubrifier et à laquelle sont raccordées deux branches, l'une qui est directement raccordée à la seconde sortie 148 et l'autre qui traverse un circuit de refroidissement ou échangeur 158 pour rejoindre ensuite la première sortie 146.

Les sorties, 146, 148 se rejoignent en aval de l'échangeur 158 pour rejoindre ensemble l'embrayage.

En outre, les moyens de détection sont susceptibles de comporter un capteur de température non représenté et apte à mesurer la température de l'huile du circuit de lubrification. Ce capteur est adapté à transmettre un signal aux moyens de commande et ici en particulier à la seconde électrovanne 140. On décrira plus en détail son mode de fonctionnement ci-après.

Lorsque la pression de commande dans le conduit 142 est nulle, le tiroir est en position de coupure de la lubrification. Cette possibilité est avantageuse en fonctionnement à basse température. Elle permet de ne pas engendrer de couple de collage ou « traînée » trop importante dans les embrayages, un tel couple parasite serait préjudiciable non seulement au rendement de la transmission mais aussi à la précision du pilotage du couple à transmettre.

Une hausse de la pression de commande est générée par la seconde électrovanne 140 et selon un premier mode de régulation, en réponse à des moyens de détection non représentés, qui détectent des premières phases de fonctionnement du véhicule correspondant par exemple au roulage normal et en particulier à la mesure de la température de l'huile, Cette hausse de la pression engendre un déplacement du tiroir et le dégagement, au moins partiel, de la première sortie 146. Le tiroir est alors maintenu dans une position équilibrée, entre la pression de commande du conduit 142 et par la différence entre les deux pressions de contre réaction des deux conduites de contre réaction 152, 154. Puisque la différence entre les deux pressions de contre réaction est proportionnelle au débit d'huile dans cette première sortie 146, on obtient une régulation hydraulique de ce débit, le débit souhaité étant donné par la pression de commande.

La position du tiroir résulte donc de cette régulation et il est susceptible d'être écarté complètement de cette première sortie 146 dans des secondes phases de fonctionnement. Le débit dans cette première sortie 146 est alors fixé par la perte de charge de la conduite et ne dépend donc plus de la position du tiroir tant que ce dernier ne se referme pas.

Si on poursuit la hausse de la pression de commande dans le conduit 142, durant des secondes phases de fonctionnement, correspondant par exemple à des passages de vitesses à haut régime, le tiroir poursuit son déplacement et découvre progressivement la seconde sortie 148, la première sortie 146 restant quant à elle, complètement découverte. Cette hausse de la pression de commande est commandée par la seconde électrovanne 140, selon un second mode de régulation en boucle ouverte où le débit dans la seconde sortie 148 dépend uniquement de la pression de commande.

Ainsi, le débit de lubrification est ajusté très finement dans les situations de roulage normal, et moins finement dans les seules situations très dissipatives en énergie qui nécessitent un débit de lubrification maximal et dans lesquelles les deux sorties 146, 148 sont libres. La régulation pour les forts débits où les deux sorties 146, 148 sont libres est moins précise, mais comme ces phases sont de faible durée par rapport à l'utilisation du véhicule, cela a peu d'impact sur le rendement global de la transmission.

Le rendement de la boite de vitesse est donc optimisé dans la plupart des phases d'utilisation du véhicule.

Par ailleurs, dans les premières phases de fonctionnement, le débit d'huile à la première sortie 146 est également le débit d'huile qui traverse l'échangeur 158 et il peut donc être piloté en fonction de la mesure de la température d'huile. Ainsi, lorsque le capteur de température détecte un échauffement de l'huile, il peut commander une hausse du débit régulé à la première sortie 146. De la sorte, plus d'énergie thermique se dissipe dans l'échangeur 158 et la lubrification est augmentée. En conséquence, le refroidissement de l'embrayage est accru.

Grâce à ce double effet, la température de l'huile dans le circuit est régulée plus rapidement.

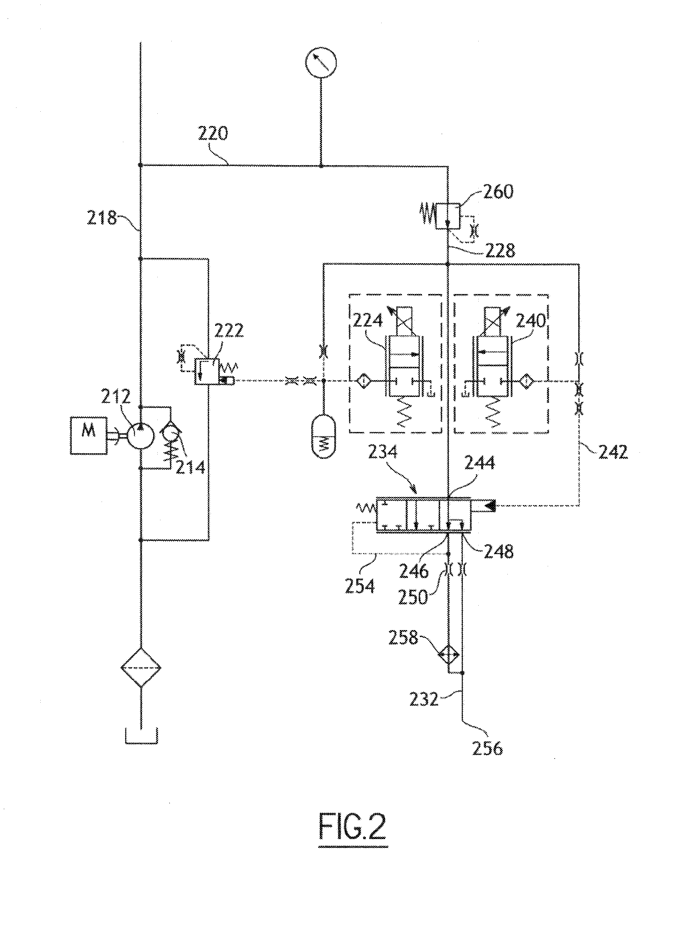

Selon un mode particulier de mise en oeuvre, non représenté sur la Figure 1 mais en revanche qui l'est sur la Figure 2, laquelle sera décrite ci-après, la régulation de débit à la première sortie 146 est remplacée par une régulation de pression. Pour ce faire, on supprime la conduite de contre réaction située en aval de l'étranglement 150. Ce mode de mise en oeuvre dégrade très légèrement la régulation de débit mais il est équivalent au mode précédent si on considère que la perte de charge de l'ensemble des composants situés en aval de l'étranglement 150 est concave. Et surtout, il simplifie le circuit hydraulique.

On se référera maintenant à la Figure 2, illustrant selon une autre variante, un circuit hydraulique dans lequel le circuit de lubrification est alimenté par un réducteur de pression 2fi0. Ce circuit hydraulique comportant un grand nombre d'éléments identiques au précédent, les références correspondant à ces éléments présenteront le même numéro, excepté le premier chiffre qui correspond au numéro de la Figure 1, précédé du numéro de la Figure 2.

On retrouve sur cette Figure 2, le distributeur à tiroir 234 qui est alimenté par une ligne secondaire 228. Cette ligne secondaire 228 est alimentée par une ligne d'alimentation 220 par l'intermédiaire du réducteur de pression 260.

Cette variante permet de supprimer le réducteur de pression à deux sorties de la variante précédente et simplifie grandement le circuit hydraulique. Par ailleurs, la vanne de régulation de pression 222 peut aisément être implantée sur le corps de la pompe 212.

De façon analogue à la variante précédente, la ligne secondaire 228 alimente la première électrovanne 224 qui permet de commander la vanne de régulation de pression 222, et la seconde électrovanne 240 qui est adaptée à commander le distributeur à tiroir 234.

Le distributeur à tiroir 234 comprend également une entrée 244 et deux sorties, 246, 248, en revanche, une seule conduite de contre-pression 254 en amont de l'étranglement 250 est conservée pour simplifier le circuit. On obtient une régulation de débit en connaissant la perte de charge des composants en aval de l'étranglement 250.

Ces modifications structurelles du circuit hydraulique permettent de le simplifier mais en revanche, son mode de fonctionnement est en tout point identique.

## Revendications

1. Dispositif de lubrification pour système d'embrayage de boîte de vitesse d'un véhicule automobile, ledit système d'embrayage produisant des premières quantités d'énergie thermique durant des premières phases de fonctionnement dudit système d'embrayage et des secondes quantités supplémentaires durant des secondes phases de fonctionnement, ledit dispositif de lubrification comprenant un circuit de lubrification et des moyens de distribution d'huile dudit circuit de lubrification, pour dissiper l'énergie thermique produite par ledit système d'embrayage, ledit dispositif comportant des moyens de refroidissement de l'huile,
**caractérisé en ce que**, durant lesdites premières phases de fonctionnement, lesdits moyens de distribution (134, 234) sont adaptés à fournir une première quantité d'huile audit circuit de lubrification (132, 232) à travers lesdits moyens de refroidissement (158, 258), et durant lesdites secondes phases de fonctionnement, à fournir une quantité d'huile supplémentaire directement dans ledit circuit de lubrification (1232, 232), en contournant lesdits moyens de refroidissement.

2. Dispositif de lubrification selon la revendication 1, **caractérisé en ce que** lesdits moyens de distribution (134, 234) fournissent ladite première quantité d'huile selon un premier mode de régulation et ladite quantité d'huile supplémentaire selon un second mode de régulation.

3. Dispositif de lubrification selon la revendication 2, **caractérisé en ce qu'**il comprend en outre, des moyens de détection et des moyens de commande (140, 240) reliés ensemble, et **en ce que** lesdits moyens de commande (140, 240) sont adaptés à commander lesdits moyens de distribution (134, 234) selon ledit premier ou second mode de régulation en réponse auxdits moyens de détection qui détectent respectivement les unes ou les autres, desdites premières ou secondes phases de fonctionnement.

4. Dispositif de lubrification selon la revendication 3, **caractérisé en ce que** lesdits moyens de commandes (140, 240) sont constitués d'une électrovanne adaptée à commander lesdits moyens de distribution (134, 234) formés d'un distributeur à tiroir.

5. Dispositif de lubrification selon la revendication 4, **caractérisé en ce que** ledit distributeur à tiroir présente une entrée (144, 244) et deux sorties, une première (146, 246) reliée auxdits moyens de refroidissement et une seconde (148, 248) reliée directement audit circuit de lubrification (132, 232) et **en ce que** le tiroir est adapté à libérer ladite première sortie (146, 246) dans lesdites premières phases de fonctionnement et à libérer les deux sorties (146, 148, 246, 248) dans les secondes phases de fonctionnement.

6. Dispositif de lubrification selon la revendication 5, **caractérisé en ce que** ladite première sortie (146, 246) dudit distributeur à tiroir est munie d'un dispositif de régulation hydraulique (150, 152, 154, 250, 254) du débit d'huile en réponse auxdits moyens de commande (140, 240).

7. Dispositif de lubrification selon la revendication 6, **caractérisé en ce que** ledit dispositif de régulation hydraulique comprend un étranglement (150) ménagé sur la première sortie (146), de part et d'autre duquel deux conduites (152, 154) de contre pression sont reliées audit distributeur à tiroir en contre réaction.

8. Dispositif de lubrification selon l'une quelconque des revendications 1 à 7, **caractérisé en ce qu'**il comprend en outre des moyens d'alimentation (122, 130, 222, 260) en huile sous pression montés sur une conduite principale (120, 220).

9. Dispositif de lubrification selon la revendication 8, **caractérisé en ce que** lesdits moyens d'alimentation en huile sous pression comportent un réducteur de pression (260).

10. Dispositif de lubrification selon la revendication 6, **caractérisé en ce que** lesdits moyens d'alimentation en huile sous pression comprennent au moins une vanne de régulation de pression (130).
